# EUROPEAN PATENT APPLICATION

(11) **EP 2 594 466 A1**
(43) Date of publication of application: **22.05.2013**
(21) Application number: 09425394.5
(22) Date of filing: 07.10.2009
(51) Int. Cl.: B62D 65/06, B05B 13/02, E05C 21/00

(54) **Coupling front and back door**

(71) Applicant: Ramses Plastica S.r.l., 10100 Torino (TO) (IT)
(72) Inventor: Piergiorgio, Marani, 80100 Napoli (NA) (IT)

(57) **Abstract**

The draft/spacer group is made out of plastic resisten to the high temperature of painting ovens and mechanical solicitations caused by door body group of three and five door vehicles.

In the table 1 are indicated the main parts that compose spacer. point1 of table 1 is represented principal axle that assures the right sliding of the car door and it is designed for three and five door vehicles as well.

Point 2 of table 1 is represented the car door fixing that assures the hub of the axle to allows to itself the develope of slinding and of its correct position.

At last at point 3 is represented the mobile part mounted on the axle assuring the functionality required.

At point 1 of table 2 is represented the sub spring group which absorves the accidental impacts . At point 2 is represented a retractile object formed by a spacer equipped with a cushion which allows to absorve accidental impacts so to avoid damages at the car door and its lock area.

At point 3 is represented an hooking figure to the vehicle made of plastic to simplify and faster the assemble process. The whol particular for its form and tipology of components could be mounted on any kind of door body

## Description

Main purpose of the proposed invention is the elimination of the problems regarding the vehicle's mass production, caring about all the details of the assemble stage.

Visiting some factories on my own, I realize how vehicle's mass production has kind of problems which, all together, strongly reduce the quality bought by "the final consumer".

In a producting world , every day more globalized, nowadays the need of avoiding wastes and damages became mandatory.

However the use of components and/or production support regarding the avoiding of damages and malfunctions in the assemble process is a must.

From this point of view comes the idea of project.

The car door is assembled in the bodywork stage and later fixed and registred by the hinges and draft of the body.

In the next painting stage all these car parts are then painted.

In the assemble stage , to make easier to the worker get inside of the vehicle, the drafts

Are put out and the car doors themselves are moved out in the components assemble area.

All these processes allowed to get very easier into the vehicle.

At the end of the assemble stage , the car door get secured to the body by an other draft which becomes the final one while the prior draft got wasted and re-used after a check on others vehicles. This ultimate procedure can results quite expansive.

The above patent reduces costs by using a disposable draft made out of plastic which has the same features and caracteristcs of a regular one (made out of steel) and assembled together with its own spacers on the car door avoiding damages and flaws being , in the previous stage, regulated the right distance from car door and body.

Main features of this patent supports are : easy to assemble keeping the same liability abd safety of an original one, also , the spacers avoid any damages during all stages of the use and at last all these parts are easy to wast with lower costs.

### THE INVENTION:

This system is made of two elements that put together forms draft/spacers groups which allows the correct use and functionality of the door/ body group beneath during all production process.

Draft works in the same way as the original , made of steel , does , being at the end mounted on the vehicle. It assures the right functionality of the door body group from bodywork to the assemble.

spacers, easy to mount, has as main purpose to keep the right safety distance the car door and so avoid damages due to any contacts between all the mobil parts, during its march towards the final stage.

It also assure the right light between door and body, during the painted stage.

The draft is made of three parts made of high temperatures and paint resistent plastic .

The principal axle assures the perfect movement of the car door and it is designed for 3 or 5 door vehicles as well. The axle also assures one or three slowing and positioning points as the original made of steel does. The fixed door assures the hub to the axle to allows itself to develop the right run speed and position and it also matches with any kind of body.

It is also present a mobile part mounted in the car door which slide over axle assuring the functionality required.

Spacer is made of two retractile bodies which the first one has a circular shape absorving bumps using its own circular shape and a compressed spring acting inside the plastic body.

Second retractile object consists in a bumpers with a cushion which absorves accidental bumps and so avoid damages to the car door and in the areas around the lock.

This particular is also formed by the add of a board equipped with screw hole and fixed point made of plastic to simplify and faster the assemble.

The whole group due the form and tipology of its components could be mounted on any type of door body.

A very important part of this patent is the creation of designs and maths supports in order to satisfy new shape and material demand agreeding the speciphics patented.

Maths also shall be important for three dimensional definition of components, or any modifications to apport during time and its best fixsing positions.

In the table 1 is represented the design of a draft, in the table 2 shows the design of a spacer.

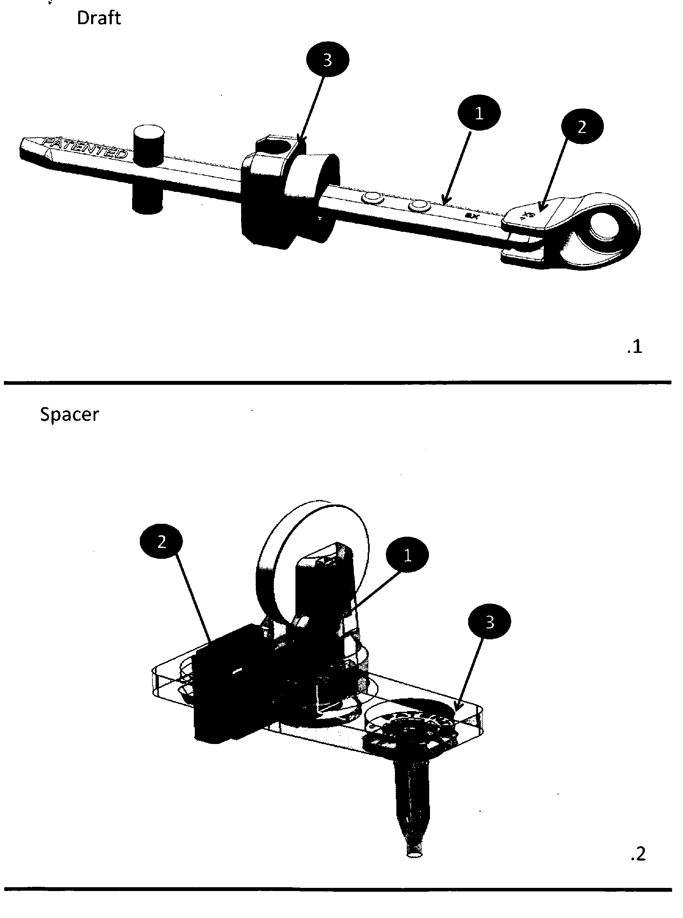

## Claims

1. We claim and reserve the exlusive use of the particulars according to the descrived forms and/or Compatible forms which avoid damages to the dashboard of vehicles in the assemble stage and during the entire production process.

2. We claim the reserve the use of suitable fixing for vehicles present on the present and future market acting in assuring the correct and stable fixing of supports without damages during the whole production process.

3. We claim with the proposed solution the elimination of damages problems due and /or higly costs now presents and complained in the production process.

4. We claim and reserve the use of suitable materials of plastic type which assures the maintenance of mechanical and thermical features during the stages assuring the functionality requested.

5. We claim the choise of forms , tickness, colour , type of materials and so on functions of type of efford to sustain and at last the choise of all the forms to get and them norms to respect.
